# EUROPÄISCHE PATENTANMELDUNG

(11) **EP 0 927 790 A2**
(43) Veröffentlichungstag der Anmeldung: **07.07.1999**
(21) Anmeldenummer: 98124515.2
(22) Anmeldetag: 22.12.1998
(51) Int. Cl.: D21F 13/04, D21J 1/16

(54) **Verfahren zur Herstellung von Schichtstoffplatten, Bleistiftbrettchen und/oder Schäften für Schreib-, Zeichen- oder Malgeräte**

(30) Priorität: 31.12.1997 DE 19758265; 31.12.1997 DE 19758266
(71) Anmelder: J.S. STAEDTLER GmbH & Co, D-90427 Nürnberg (DE)
(72) Erfinder: Handl, Werner, 90518 Altdorf (DE)

(57) **Zusammenfassung**

Die Erfindung betrifft ein Verfahren zur Herstellung von Schichtstoffplatten (1), Bleistiftbrettchen (202) und/oder Schäften (11) für Schreib-, Zeichen- oder Malgeräte, sowie die damit hergestellten Produkte.

Hierbei wird zunächst in einem Behälter (7) eine im wesentlichen aus Rohstoffpulver und/oder aus Fasern (3) - vorzugsweise aus Holzfasern oder Holzpulver - und Wasser bestehende Pulpe (30) gebildet, die im wesentlichen bindemittelfrei ist. Diese Pulpe (30) wird auf ein Sieb (8) aufgebracht und unter Vliesbildüng lagenweise scheiben- oder folienförmig vorgetrocknet. Das Vlies wird auf eine Walze (9) aufgerollt, wobei zwischen jede Lage (2) einer Materialschicht, eine Verbindungsschicht (4) aus Bindemittel, Klebstoffen und/oder sonstigen Zusätzen bzw. Additiven aufgebracht wird.

Die entstehenden Platten werden anschließend geschnitten, entwässert und getrocknet und in an sich bekannter Weise weiterverarbeitet, zu beliebigen Schichtstoffplatten (1), zu Bleistiftbrettchen (202) und/oder zu Schäften (11) für Schreib-, Zeichen- oder Malgeräte - oder direkt zu derartigen Schreib-, Zeichen- oder Malgeräten, die somit ebenfalls Gegenstand und Bestandteil der vorliegenden Erfindung sind.

## Beschreibung

Die Erfindung betrifft ein Verfahren zur Herstellung von Schichtstoffplatten, Bleistiftbrettchen und/oder Schäften für Schreib-, Zeichen- oder Malgeräte.

Im Sinne der beanspruchten Lehre sind nachfolgend unter **Schichtstoffplatten** insbesondere Platten aus miteinander verbundenen Schichten aus vorzugsweise Fasern oder sonstigen miteinander verpreßbaren Partikeln aller Art zu verstehen, deren Komponenten mechanisch oder durch chemische Zusätze miteinander verbunden sind.

**Als Schichtstoffe** generell sind im vorliegenden Zusammenhang vor allem Platten oder sonstige Körper aus blatt- oder folienförmigen Materialien zu verstehen, die vorzugsweise aus Holzfasern, aus anderen Zellstoff-Fasern oder aus sonstigen natürlichen oder synthetischen Fasern oder Pulvern bestehen und die mehrere miteinander verbundene Lagen bzw. Materialschichten aufweisen.

Als sogenannte **Preßfaserplatten** (PFP) bilden sie ggf. auch die Basisplatte, aus der eine bestimmte Anzahl kleinerer Brettchen oder sonstiger Grundkörper für die Weiterverarbeitung, z.B. durch Zersägen, Stanzen oder Schneiden, gewonnen werden, die dann z.B. für Möbel oder auch zur Herstellung von Schäften für Schreibgeräte dienen können.

Aus den vorgeschlagenen **Schichtstoffplatten** können z.B. unter anderem auch **Brettchen** bzw. sogenannte **Bleistiftbrettchen**, hergestellt werden, die üblicherweise als Grundkörper für die Blei- oder Buntstiftherstellung verwendet werden und hierfür Zwischenprodukte bilden, die üblicherweise in fester Form und in der etwaigen Größe mehrerer, z.B. 5 bis 12 - vorzugsweise 7 bis 10 - halber Stifte vorliegen und aus denen, nach dem Nuten, dem Einleimen der Minen und dem Verbinden zweier komplementärer Brettchen miteinander, die endgültigen Stifte gefertigt werden, deren Schäfte dann hieraus gestaltet sind.

Bei **mechanischen** oder sonstigen **Schreib-, Mal- oder Kosmetikstiften** kann die Herstellung des Schaftes und die Einbringung der Aufnahmebohrungen für die Mine(n) z.B. auch derart erfolgen, daß derartige Brettchen in der gesamten Schaftstärke erzeugt und dann mit den erforderlichen Bohrungen und/oder sonstigen Durchbrechungen versehen werden.

Herkömmliche Faserplatten, wie z.B. sogenannte Preßspanplatten oder Holzfaserplatten, werden meist aus gepreßten Holzfasern oder lignocellulosehaltigem Fasermaterial hergestellt.
Durch Einwirkung von Wärme, Feuchtigkeit, mechanischer Kräfte, insbesondere Druckkräfte und/oder Chemikalien wird in Zerfaserungsanlagen das Lignin, Cellulose und Hemicellulose enthaltende Rohmaterial in seine faserartigen, anatomischen Grundbestandteile in der Form von Einzelfasern und Faserbündeln zerlegt.

Im Sinne der beanspruchten Lehre sind nachfolgend unter **Schreibgeräten** insbesondere Schreib-, Zeichen- oder Malstifte aller Art zu verstehen, deren Schreibelement in der Regel eine mit dem Schaft fest verbundene Mine aus geeignetem Schreib- oder Malmittel ist.
Die vorgeschlagenen **Schäfte für Schreibgeräte** sind aber auch für Schreib-, Zeichen- oder Malstifte verwendbar, deren Schreibelemente axial beweglich und ggf. auch austauschbar im Schaft angeordnet sind. Dies können verschiedenartige mechanische Schreibgeräte sein, wie z.B. Kugel- oder Dochtschreibgeräte aller Art, Füllfederhalter oder auch sogenannte Fallstifte oder Feinminenstifte mit unterschiedlicher Klemm- und/oder Vorschub-Mechanik. In gleicher Weise eignet sich der gattungsgemäße Schreibgeräteschaft auch zur Herstellung kosmetischer Stifte aller Art und umfaßt somit auch diese Produktpalette, wobei dann die eingesetzte Mine eine kosmetische Präparation ist oder enthält.

**Faserplatten,** bzw. Preßspanplatten oder auch Holzfaserplatten allgemein sind grundsätzlich nicht neu.
Aus **[1.]** DE-OS 23 25 670, **[2.]** WO 94/25264, **[3.]** EP 518018 A1 und aus **[4.]** US-PS 5 346 930 ist es zum Beispiel bekannt, aufgeschlossenes Fasermaterial (meist als Zellstoff oder Cellulose bezeichnet) für Faserplatten zu verwenden.
Diese Fasern werden in der Regel aus Hackschnitzeln nach dem CTMP-Verfahren (chemo-thermo-mechanical pulping) oder nach dem TMP-Verfahren (thermo-mechanical pulping) hergestellt. Die Fasermaterialien werden in Wasser zu einer sogenannten Pulpe aufgeschlämmt und gegebenenfalls nach Zusatz von Bindemitteln und/oder sonstigen Additiven auf das Sieb einer Papiermaschine aufgebracht.
Nach erfolgter Entwässerung wird das verfilzte Faservlies von einer Formatwalze übernommen und weiter entwässert.
Für die Produktion von Schäften für Schreibgeräte bzw. von Brettchen zu deren Herstellung, werden Faserplatten in Stärken von ca. 5,0 mm benötigt. Das heißt, das Faservlies muß so dick sein, daß nach vollständiger Trocknung und Schwindung dieses Endmaß in der Stärke erreicht wird.
Da dies mit einer einzigen Lage weder technisch noch wirtschaftlich sinnvoll machbar ist, werden mehrere Lagen erzeugt und auf die Formatwalze übertragen. Der endgültige Faserteppich besteht somit aus mehreren, vorzugsweise 4-40 Lagen. Ist die gewünschte Lagenzahl auf der Formatwalze erreicht, wird über die Walzenlänge ein Kappung bzw. eine Trennung vorgenommen und der Teppichmantel über die Walzenlänge abgewickelt. Der dann aus Einzellagen bestehende Faserteppich kann nun mittels Passage durch einen Walzenspalt noch weiter teilentwässert sowie kalibriert werden.
Zur vollständigen Entwässerung bzw. Trocknung durchläuft der Faserteppich einen Trockentunnel. Der Faserteppich kann ebenso durch Heißpressen in einer beheizten Naßpresse auf die endgültigen Eigenschaften gebracht werden.
Nachteilig bei diesen bisherigen Verfahren ist es, daß die so hergestellten Produkte ohne zusätzliche Bindemittel keinen ausreichenden Verbund zwischen den einzelnen Lagen besitzen, da die Verfilzung allein meist nur einen schwachen Verbund ergibt und oft nicht stabil wird.
Bei einer späteren Bearbeitung durch Hobeln, Fräsen, Schneiden oder Spitzen etc. werden Lagenteile herausgerissen und Deformationen verursacht.
Der Einsatz von Bindemitteln hat sich hierbei bisher jedoch wenig bewährt, da die meisten Bindemittel keine ausreichende Retention auf der Faseroberfläche bzw. im Faservlies haben und bei der Entwässerung größtenteils ausgewaschen werden.
Neben mangelhafter Verklebung der Schichten entstehen durch das ausgewaschene Bindemittel somit oft erhebliche Umwelt- bzw. Abwasserbelastungen und damit auch entsprechende Probleme. Die Verwendung zur ausreichenden Wirksamkeit erforderlicher, entsprechend hoher, Bindemittelkonzentrationen ergibt zwar relativ stabile Endprodukte, die entstehenden Kosten hierfür sind jedoch wirtschaftlich oft nicht mehr vertretbar.

**Schäfte für Schreibgeräte** aus Schichtstoffen, sowie Verfahren zur Herstellung derartiger Schäfte bzw. Stifte sind allgemein ebenfalls bereits bekannt.
Hierbei werden als Ausgangskörper insbesondere direkte Wicklungen um die jeweilige Mine oder auch vorgefertigte Brettchen aus geschichtetem Fasermaterial verwendet.
So ist es z.B. aus **[5.]** DE-GM 90 01 243 und aus **[6.]** DE-OS 40 03 289 bekannt, Schreibgeräteschäfte aus einer Umhüllung aus blatt- oder folienförmigen Papier-, Holz- oder Kunststofflagen herzustellen.
Hierbei sollen die mehrschichtig übereinander angeordneten bzw. schichtweise übereinandergelegten oder gerollten folienförmigen Lagen derart miteinander verklebt sein, daß sie einen festen biegesteifen und ggf. spitzbaren Schaft ergeben.
Bei gerollten Umhüllungen soll dieser Schaft ggf. aus einer einseitig mit Klebstoff bestrichenen Blattlage im Rollverfahren gebildet werden. Wie die einzelnen Partikel der "Folie" selbst miteinander verbunden sein sollen, ist hierbei nicht erkennbar. Zur Verklebung der einzelnen (Folien) Schichten miteinander werden Holz- bzw. Kaltleim oder Dispersionskleber, vorzugsweise Polyvinyl-Acetat-Kleber oder andere Kunststoff-Dispersionen vorgeschlagen.
Problematisch hierbei ist es vor allem auch, daß nichts zu den i.d.R. erforderlichen Bindemitteln für den Fasernverbund und über deren Verarbeitung ausgesagt wird, daß das Rollverfahren mit dem angegebenen Verfahren derzeit verfahrenstechnisch schwer beherrschbar ist und daß zu den "Schichtbrettchen" auch nicht erkennbar ist, wie diese großtechnisch hergestellt werden können.

Aus **[7.]** CH-PS 204 257 und aus **[8.]** DE-PS 856 110 ist außerdem die Herstellung von Schäften für Schreibgeräte bekannt, wonach **Bleistiftbrettchen** - als Zwischenprodukt - derart gefertigt werden sollen, daß massive Holz folienschichten von ca. 0,05 bis 0,25 mm Stärke mit Bindemittel beschichtet oder getränkt und zu Holztafeln verbunden werden sollen. In einer Variation können auch Zwischenschichten aus Holzmehl vorgesehen sein, wenn gewichtmäßig leichtere Produkte gewünscht werden.
Das Holzmehl wird hierzu auf die mit Bindemittel beschichteten Holzfolien zusätzlich aufgestreut.
Das Bindemittel kann flüssig oder fest auf die Folien aufgetragen werden und kann zusätzlich auch mit Weichmachern vermischt sein, der zusammen mit dem Bindemittel in das Holz zu dessen Imprägnation eindringen soll.
Die so hergestellten Holztafeln werden dann verpreßt, wobei ggf. gleichzeitig die Rillen für die Minen und ein Teil des äußeren Stiftprofils mitgepreßt werden können.
Da derartige profilierende Preßverfahren in der industriellen Produktion relativ schwer beherrschbar und teuer sind und das Ergebnis zudem in hohem Maße auch von der Art des verwendeten Holzes abhängt, erscheint es fraglich, ob mit den hier angegebenen Lösungen jemals brauchbare Ergebnisse erzielt werden konnten oder können. Verteuernd wirkt hierbei auch, daß jede Profilplatte zum Verpressen gesondert eingelegt werden muß.
Bei unprofilierten Preßtafeln, die wie Massivholz-Brettchen weiterbearbeitet werden, muß ebenfalls auf gleichgerichteten Faserverlauf geachtet werden, was sich zusätzlich verteuernd auswirken kann.

Es ist daher **Aufgabe** der vorliegenden Erfindung, ein Verfahren zur Herstellung von Schichtstoffplatten,
Bleistiftbrettchen und/oder Schäften für Schreib-, Zeichen- oder Malgeräte vorzuschlagen, die einfach und umweltschonend herzustellen sind und die dennoch stabile und ggf. gut bearbeitbare Zwischen- oder Endprodukte ergeben, wobei die Platten und/oder Brettchen großtechnisch und wirtschaftlich hergestellt werden können und die genannten Nachteile nicht aufweisen und die somit insbesondere auch unter Vermeidung erhöhter Abwasser- bzw. Umweltbelastungen zu fertigen sind. Schreibgeräte bzw. Schreibgeräteschäfte aus derartigen Schichtstoffen sollen stabil und dennoch gut spitzbar sein.

Diese Aufgabe wird mit den in den Ansprüchen umfaßten Merkmalen gelöst, wobei vorteilhafte Ausgestaltungen und Weiterbildungen in den jeweiligen Unteransprüchen erfaßt sind.

Die vorschlagsgemäßen Platten, Brettchen und/oder Schäfte bestehen aus Schichtstoffen, wobei die einzelnen Materialschichten (MaS) zunächst frei von Bindemittel (BM) sind und wobei zwischen jeder Materialschicht (MaS) eine Schicht aus Bindemittel (BM) angeodnet ist, das beim Schichten, Verpressen und Trocknen in die angrenzenden Materialschichten (MaS) migriert, bzw. eindringt.
Soweit die Materialschichten (MaS) aus Fasermaterial bestehen, sind diese Fasern im wesentlichen in Längsrichtung orientiert, um dem Stift dadurch eine erhöhte Biegefestigkeit zu verleihen.

Zur Herstellung der vorschlagsgemäßen Schichtstoff- bzw. Preßfaserplatte (PFP) bzw. einzelner Brettchen, die als Ausgangskörper für Schreib- Zeichen- oder Malgeräte dienen können, wird zunächst - wie an sich bekannt - in einem Pulper ein Stoffbrei aus Holzschliff oder anderen Naturfasern oder Pulvern und Wasser erzeugt.
Diese wässrige Stoffsuspension (Pulpe) wird z.B. auf ein Langsieb aufbracht und nach der Entwässerung von einer Formatwalze übernommen und auf dieser aufgerollt.
Das Bindemittel (BM) - hierunter ist nachfolgend jedes geeignete Bindemittel, Bindemittelgemisch und/oder Klebstoff zu verstehen - und/oder weitere Additive werden nicht bereits in die wässrige Fasermischung eingearbeitet, sondern erst nach einer ersten Abtrocknung auf dem Langsieb, auf einem anderen umlaufenden Papiersieb oder auf einer sonstigen Trockenvorrichtung, selektiv als Beschichtung auf der Formatwalze, bzw. auf einem Rundsieb oder auf einer anderen Aufnahmevorrichtung, auf jede Vliesbahn sequentiell aufgebracht. Dabei kann z.B. die Technologie des Sprühens, Walzens oder Streichens vorteilhaft angewandt werden.
Es wird hierbei jede einzelne Lage bzw. Bahn sowohl in sich selbst, als auch mit der benachbarten Bahn bzw. Lage verbunden bzw. verklebt, ohne daß es zu einem Auswaschen oder sonstigen großen Verlust von Bindemittel, Klebstoff oder der ggf. aufzubringenden anderen Additive kommt.
Hierbei bilden die Bindemittel, die Klebstoffe und/oder sonstigen Additive Zwischenschichten und diffundieren auch in die Faserhohlräume der einzelnen Bahnen ein und verdübeln und verankern somit die einzelnen Fasern praktisch in allen Schichten und in allen Richtungen miteinander.
Die Bindemittel und/oder die Klebstoffe werden dann i.d.R. bzw. vorzugsweise thermisch ausgehärtet. Dies geschieht durch die Passage des beheizten Trockentunnels und/oder mittels einer Heißpresse. Mit letzterer läßt sich auch die Dichte des Endproduktes variieren.
Bei den erfindungsgemäßen Platten können **Fasertypen** diverser - insbesondere auch heimischer Hölzer - sowie Fasern aus dem Kurzumtrieb bzw. Einjahresfasern wie Hanf, Jute, Sisal, Bambus, Kenaf, Kokos, Baumwolle verwendet werden und zur Bildung der Pulpe zum Einsatz kommen.

Als **Bindemittel** kommen vorzugsweise in Betracht:
Harnstoff-Formaldehydharze (UF-Harze), Mischharze aus Harnstoff-Formaldeyd und Malamin (MUF-Harze), Phenolformaldehydharze (PF-Harze), Tanninformaldehydharze (TF-Harze), Harze auf der Basis polymerer Diisocyanate (PMDI-Harze), Furanharze, Acryl- und Methacrylharze, sowie als Co-Bindemittel Lignine, Tannine, Cellulosederivate, Polyvinylalkohole (PVA), Polyvinylpyrrolidone (PVP) Stärke und Stärkederivate, Pektine, Alginate, Guarderivate und Traganth.

Die ggf. weiterhin zuzusetzenden **Additive** haben insbesondere die Aufgaben, die Prozeßgängigkeit günstig zu beinflussen.
So müssen diese Stoffe einerseits die Fasern flexibel halten um eine Versprödung zu verhindern und andererseits für die schnell laufenden Bearbeitungsmaschinen eine hohe Gleit- und Schmierwirkung sicherstellen. Zudem sollen sie auch z.B. die Spitzbarkeit des fertigen Schreibgerätes verbessern.
Als hierfür besonders geeignet sind:
Wachse bzw. Wachs-Emulsionen, Fettsäuren und/oder deren Salze, Fettalkohole und/oder Polyglykole.
Ferner haben sich Zugaben von Bornitrid, Talkum, Graphit und PTFE ebenfalls als günstig erwiesen.

Die vorschlagsgemäßen **Schäfte** bestehen aus Schichtstoffen, wobei die einzelnen Materialschichten (MaS) zunächst frei von Bindemittel (BM) sind und wobei zwischen jeder Materialschicht (MaS) eine Schicht aus Bindemittel (BM) angeodnet ist, das beim Schichten, Verpressen und Trocknen in die angrenzenden Materialschichten (MaS) migriert, bzw. eindringt und somit eine Migrationsschicht (MiS) bildet. Soweit die Materialschichten (MaS) aus Fasermaterial bestehen, sind diese Fasern im wesentlichen in Längsrichtung orientiert, um dem Stift dadurch eine erhöhte Biegefestigkeit zu verleihen.
Zur Herstellung der Brettchen, bzw. der als Ausgangskörper dienenden Preßfaserplatte (PFP), wie sie oben bereits beschrieben wurden.

Die Erfindung wird nachfolgend anhand einiger Beispiele erläutert.

### 1.) Herstellungsbeispiel:

In einem Pulper wird ein Stoffbrei aus Holzschliff und Wasser erzeugt. Die Stoffsuspension bzw. die Pulpe wird auf ein Langsieb aufgegeben und nach der Entwässerung von einer Formatwalze übernommen. Diese Vlies-Bahn wird nun mit einer Dispersion eines Phenol-Novolakes mit Hexamethylentetramin (=Bindemittel) und Calciumstearat (=Gleitmittel) besprüht. Dabei beträgt das Verhältnis Bindemittel zu Gleitmittel 2:1 bezogen auf Feststoff).
Bei einem Vliesgewicht von ca. 80g/m² atro (absolut trocken) werden für eine 5,00 mm starke Platte mit einer Dichte von 0,65 ca. 35 Lagen benötigt.
Der Bindemittel- und Gleitmittelgehalt (Dichte 1,0 nach der Kondensation) beträgt ca. 14 Gew.-%.
Nachdem die erforderliche Lagenzahl erreicht wurde, wird eine Kappung vorgenommen und der verklebte Vliesteppich über den Walzenumfang abgewickelt und durch einen Trockentunnel befördert. Über die Länge des Tunnels steigt dabei die Temperatur auf 170°C an.
Das inzwischen auch in die einzelnen Lagen eindiffundierte Bindemittel wird hierbei vollständig auskondensiert und aus der fertigen Platte können nun nach Abkühlung Brettchen in beliebiger Größe herausgesägt und ggf. wie üblich genutet und zu Stiften oder zu anderen Artikeln in bekannter Weise weiterverarbeitet werden.
Bei der Vlieserzeugung kann statt mit einer Formatwalze zum Beispiel auch mit einem Rundsieb gearbeitet und das Bindemittel nach der Gautschwalze auf der Übernahmewalze in gleicher Weise appliziert werden.
Es hat sich jedoch gezeigt, daß die günstigsten Ergebnisse auf Langsiebmaschinen erzielt werden, da durch Variation von Stoffauftrag, Siebgeschwindigkeit und Entwässerung, die Faser-Ausrichtung und die Blattbildung entsprechend den gewünschten Eigenschaften günstig beeinflußt werden kann. So läßt sich beispielsweise durch Orientierung der Fasern eine weitgehend anisotrope Platte erzeugen.

### 2.) Herstellungsbeispiel:

Nach einem alternativen Verfahren können erfindungsgemäß die Platten aber auch noch nachträglich zusätzlich oder auch ausschließlich mit Bindemitteln und/oder Additiven imprägniert werden - wie dies bereits bisher auch bei der herkömmlichen Stiftherstellung der Fall ist.
Es kann demnach auch auf der Papiermaschine zunächst ohne Bindemittel und ohne Gleitmittel gearbeitet werden, wobei die Verfestigung oder Modifikation durch nachträgliche Imprägnation mit Bindemittel und/oder ggf. mit weiteren Additiven erfolgt.
Zur Verbindung der einzelnen Lagen auf der Formatwalze kann hier ggf. lediglich eine dünne Klebstoffschicht aufgebracht werden, die dann allerdings eine gewisse Durchlässigkeit für das Bindemittel und/oder für die ggf. noch einzubringenden anderen Additive aufweisen muß.
Aus der fertigen Platte werden nach der Abkühlung Stiftbrettchen in beliebiger Größe herausgesägt und - ebenfalls wie üblich - genutet und zu Stiften oder zu anderen Gegenständen in bekannter Weise weiterverarbeitet.

In den ergänzenden Abbildungen zeigt:
- **Figur 1:**: eine erfindungsgemäße Schichtstoffplatte,
- **Figur 2:**: eine Vorrichtung zur Herstellung erfindungsgemäßer Schichtstoffplatten,
- **Figur 3:**: die Seitenansicht der Formatwalze und der Sprühvorrichtung nach Fig. 2,
- **Figur 4:**: die Formatwalze gem. Fig. 3 mit aufgeschnittener Lagenbahn,
- **Figur 5:**: eine Schichtstoffplatte als Rohling zur Herstellung von Brettchen,
- **Figur 6:**: eine Ausschnitt-Vergrößerung gem. Position X in Fig. 5.
- **Figur 7:**: ein erfindungsgemäßes Schreibgerät,
- **Figur 8:**: das Schreibgerät gem. Fig. 7 im Schnitt.

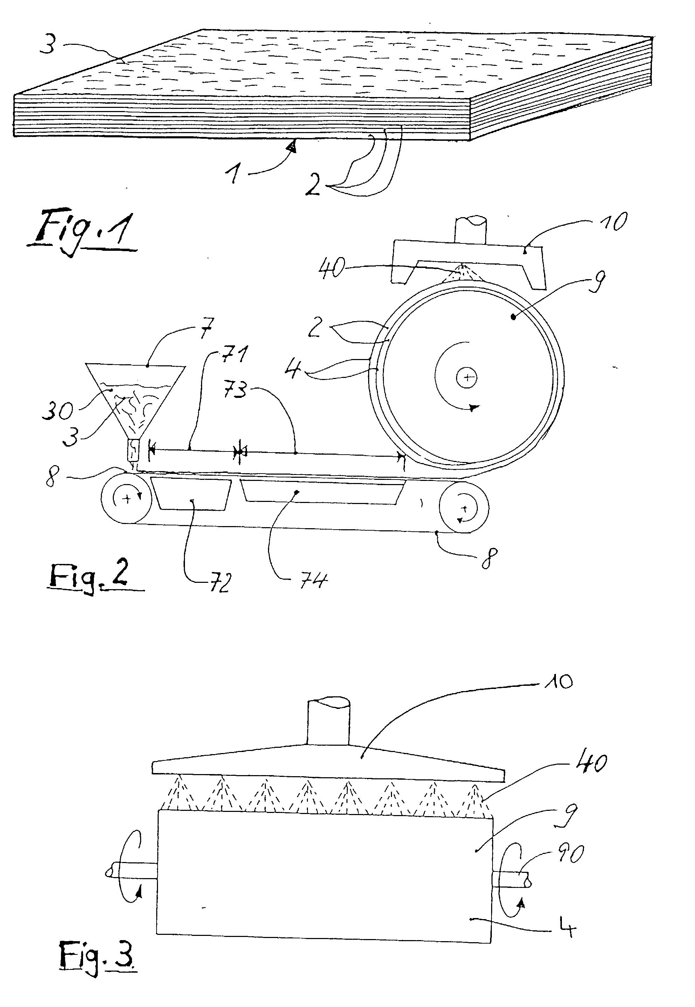

Die **Figur 1** zeigt eine erfindungsgemäße Schichtstoffplatte 1, wobei die schichtweise aufgebauten und miteinander verbundenen Lagen 2 bzw. Scheiben oder Folien aus natürlichen Fasern 3 oder Pulvern aus Holzfasern oder Holzschliff bestehen.

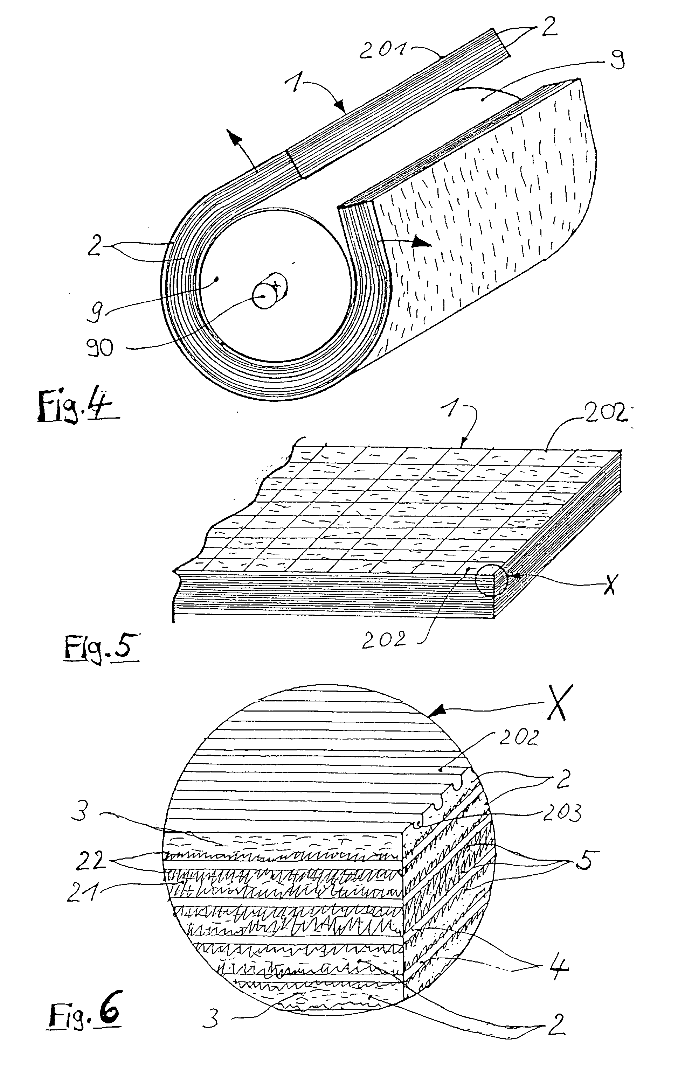

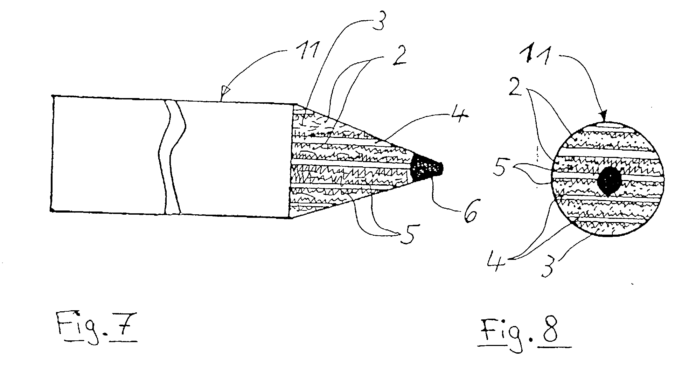

Nach den **Figuren 2 und 3** wird hierfür zunächst in einem Pulper bzw. Behälter 7 eine im wesentlichen aus Rohstoffpulver und/oder aus Fasern 3 und Wasser (W) bestehende Pulpe 30 bzw. (WFP) gebildet, die im wesentlichen bindemittelfrei ist.
Diese Pulpe 30 (WFP) wird auf ein Sieb 8 - hier auf ein relativ schnell laufendes Langsieb - aufgebracht und unter Vliesbildung lagenweise scheiben- oder folieförmig vorgetrocknet.
Das grob vorgetrocknete Vlies wird dann auf eine Walze 9 aufgerollt. Hierbei wird zwischen jede Lage 2 einer Materialschicht (MaS), eine Verbindungsschicht 4 aus Bindemittel (BM), Klebstoffen (KS)und/oder sonstigen Zusätzen (Z) bzw. Additiven als Substrat 40 aus einer Sprühvorrichtung 10 aufgebracht.
Die nach dem Entwässern und abschließenden Trocknen hieraus entstehende Platte 1 (gem. Fig.1, 3 und 4) wird dann ggf. - in bekannter Weise - zu Brettchen bzw. zu Bleistiftbrettchen 202 (gem. Fig. 4 und 5) und/oder auch direkt zu Schäften 11 für Schreibgeräte (gem. Fig. 7 und 8) weiterverarbeitet.
Innerhalb der einzelnen Lagen 2, die zunächst aus Fasern 3 und Wasser (W) als Pulpe (WFP) auf das Sieb 8 aufgebracht werden, richten sich die Fasern 3 in einem Orientierungsbereich 71 über einer ersten Entwässerungszone 72 in Längsrichtung aus und werden dann in einem Fixierungsbereich 73 in einer Vakuumzone 74 bei weiterem Trocknen fixiert.

Zur Erzielung einer gewünschten Brettchenstärke wird zunächst eine erforderliche Anzahl von Vlies-Lagen 2 auf die mit einer Welle 90 gelagerten Walze 9 - z.B. auf eine Formatwalze - aufgetragen. Dann wird der gesamte Auftrag entlang einer Schnittlinie (201) auf der Walze 9 aufgeschnitten und anschließend einer Nachtrocknung und ggf. auch einer thermischen Nachbehandlung und/oder Verpressung unterzogen, zur ggf. weiteren Verfestigung des Bindemittels (BM) und/oder des Klebstoffes (KS).

Die Fertigstellung der Platten 1 bzw. Brettchen 202 nach dem Trocknen und ggf. Pressen der Platten 1 durch Schneiden auf das gewünschte Maß und ggf. auch das Einbringen der Nuten 203 erfolgt in bekannter Weise, wobei auch das Beleimen, sowie das Einsetzen der Minen in herkömmlicher Art geschehen kann.

In den **Figuren 4 und 5** ist verdeutlicht, daß die Abmessungen der Platte 1 von der Breite und dem Durchmesser der Walze 9 einerseits und zum anderen von der Anzahl der übereinandergelegten Lagen 2 abhängt. Entlang einer durchgehenden Schnittlinie 201 wird die fertige Wicklung aufgeschnitten und in einer Ebene plan aufgelegt. Diese Rohplatte wird dann ggf. nachgetrocknet und gepreßt bis die gewünschte Festigkeit und der erforderliche Trocknungsgrad erreicht ist.

Je nach gewünschter Größe der Platten 1 bzw. der Folgeprodukte wie, z.B. von Bleistiftbrettchen 202 oder der sonstigen Formkörper, können diese dann ggf. verschnittfrei ausgesägt, gestanzt oder anderweitig geschnitten werden.

**In Figur 6** ist als Vergrößerung X gem. Fig.5 erkennbar, daß die Platten 1 bzw. die Brettchen 202 bereits mit Nuten 203 versehen sein können, in die nachfolgend z.B. Minen für Schreibgeräte eingelegt bzw. eingeleimt werden können.
Diese Nute 203, oder auch andere Muster oder Strukturierungen, können bereits beim Pressen eingeformt oder auch nachträglich eingefräst werden.

Die aus den Verbindungsschichten 4 in die Lagen 2 einwandernden Bindemittel bilden Migrationsschichten 5, die entweder nur in die Randbereiche 22 oder auch bis in die jeweiligen Kernbereiche 21 eindringen.
Die einzelnen Fasern 3 sind hier erkennbar längsgerichtet und verlaufen mit den Nuten 203 im wesentlichen paralell, zur weiteren Stabilisierung der Platten bzw. der fertigen Produkte.

Aus jeweils zwei komplementären Brettchen 202, wobei in der Regel in eines die Mine vorab eingeleimt ist, wird ein Preßling gefertigt, aus dem wiederum - je nach Vorgaben und Abmessungen - 5 bis 12 einzelne Stifte als Schreib-, Zeichen- oder Malgeräte, geschnitten und fertiggestellt werden können.

Die einzelnen Lagen 2 der Grundmasse (GM) sind hierbei vor der Verbindung der Materialschichten (MaS) miteinander, im wesentlichen frei von Bindemitteln (BM) und/oder Klebstoffen (KS).
Zwischen jeder Lage 2 bzw. Materialschicht (MaS) befindet sich eine Verbindungsschicht 4 aus migrierbaren Bindemitteln (BM), Klebstoffen (KS) und/oder sonstigen Zusätzen (Z).
Das Bindemittel (BM), der Klebstoff (KS) und/oder die sonstigen Zusätze (Z) der Verbindungsschicht 4 ist als Migrationsschicht 5 erkennbar mindestens teilweise in die jeweilige Lage 2 der Materialschichten (MaS) eingedrungen und liegt nach dem Verbinden der Materialschichten (MaS) miteinander, partiell ggf. unterschiedlich zwischen den einzelnen Fasern 3 oder Partikel der Materialschichten (MaS) verteilt vor.

Innerhalb der Migrationsschicht 5 und somit auch innerhalb der jeweiligen Lagen 2, liegt das Bindemittel (BM), der Klebstoff (KS) und/oder die sonstigen Zusätze (Z) der Verbindungsschicht 4 zwischen den einzelnen Fasern 3 oder Partikel der Lagen 2 bzw. der Materialschichten (MaS) ungleichmäßig verteilt vor.
Hierbei besteht in den Materialschichten (MaS) bzw. Lagen 2 ein Konzentrationsgefälle des Bindemittels (BM), Klebstoffs (KS) und/oder der sonstigen Zusätze (Z), wobei in den Kernbereichen 21 der Lagen 2 bzw. der Materialschichten (MaS) weniger Bindemittel (BM), Klebstoff (KS)und/oder sonstige Zusätze (Z) vorhanden ist bzw. sind, als in den Randbereichen 22 der Lagen 2.
Besonders vorteilhaft ist es hierbei, daß die einzelnen Lagen 2 bzw. die Materialschichten (MaS) des Schaftes 1 vor der Verbindung miteinander bzw. vor dem Aufbringen der Verbindungsschichten 4 im wesentlichen frei von Bindemitteln (BM) und/oder sonstigen Zusätzen (Z) sind.
Dadurch wird einerseits Bindemittel u.ä. eingespart und zum anderen produktionstechnisch ohne verstärkte Umweltbelastung gefertigt.
Als Zwischenprodukt bzw. als typischer Ausgangskörper für die herkömmliche Stiftproduktion sind **Bleistiftbrettchen** erforderlich, die vorteilhafterweise auch aus den vorschlagsgemäßen Schichtstoffen bestehen, wobei sie aus schichtweise aufgebauten und miteinander verbundenen Lagen 2 bzw. Scheiben oder Folien aus natürlichen Fasern 3 oder Pulvern, insbesondere aus Holzfasern oder Holzschliff bestehen und zur Herstellung von Schreibgeräten bzw. Schäften aus Schichtstoffen, nach herkömmlicher Art verwendet werden können. Hierbei sind die einzelnen Lagen 2 bzw. die Materialschichten (MaS) ebenfalls zunächst frei von Bindemitteln (BM) und zwischen jeder Materialschicht (MaS) bzw. Lage 2 ist eine Verbindungsschicht 4 aus Bindemittel (BM), Klebstoff (KS) und/oder sonstigen Zusätzen (Z) vorhanden.
Diese Verbindungsschichten 4 weisen somit das Bindemittel (BM) und/oder den sonstigen Zusatz (Z) für die Lagen 2 bzw. für die einzelnen Fasern 3 oder Partikel insgesamt auf, das als dann Migrationsschicht 5 mit in der Regel unterschiedliche Konzentration und Dichte in die einzelnen Lagen 2 vor allem in deren Randbereiche 21 eindringt und dort ggf. auch ausgehärtet bzw. verfestigt wird. Auch hierbei ergibt sich, daß bei dem jeweiligen Bleistiftbrettchen die einzelnen Lagen 2 bzw. Scheiben oder Folien durch die Verbindungsschichten 4 miteinander fest verbunden werden und das Bindemittel (BM), der Klebstoff(KS) und/oder die sonstigen Zusätze (Z) erst von den Verbindungsschichten 4 aus in die jeweils angrenzenden Lagen 2 der Materialschichten (MaS) eindringt.

Die **Figuren 7 und 8** zeigen ein erfindungsgemäßes Schreibgerät aus Schichtstoff, wobei der Schaft 11 aus schichtweise aufgebauten und miteinander verbundenen Lagen 2 bzw. Scheiben oder Folien aus natürlichen Fasern 3 oder Pulvern aus Holzfasern oder Holzschliff besteht, und eine Mine 6 eingeleimt oder eingesetzt aufweist.
Der Schaft 11 ist hierbei wie zu Figur 6 beschrieben aufgebaut und die Migrationsschichten 5 weisen somit auch hier unterschiedliche BM-, KS- und/oder Z-Konzentration und Dichte auf und können die Lagen 2 aber auch von beiden Seiten vollständig durchdringen.
Auch hierbei sind die einzelnen Lagen 2 durch die Verbindungsschichten 4 miteinander fest verbunden und das Bindemittel (BM), der Klebstoff(KS) und/oder die sonstigen Zusätze (Z) sind von den Verbindungsschichten 4 aus in die jeweils angrenzenden Lagen 2 der Materialschichten (MaS) eingedrungen.

### Positionen, Begriffe und Abkürzungen:

1 Platte, Schichtstoffplatte, (Preß-)Faserplatten (PFP)
   **11** Schaft (eines Schreib-, Zeichen- oder Malgerätes),
**2** Lage(n), Vlies-Lage(n),
   Materialschichten (MaS),
   Grundmasse (GM)
   **201** Schnittlinie,
   **202** Brettchen, Bleistiftbrettchen,
   **203** Nuten (im Brettchen),
   **21** Kernbereich (einer Lage 2),
   **22** Randbereich (einer Lage 2),
**3** Fasern (F),
   **30** Pulpe (WFP),
      im Wesentlichen aus Wasser (W) und Fasern (F),
**4** Verbindungsschicht aus:
   **40** Substrat =
      Bindemittel (BM),
      Klebstoff (KS) und/oder
      Zusätze (Z) / Additive,
**5** Migrationsschicht (MiS) (von 4 bzw. 40 in 2),
**7** Behälter, Pulper,
   **71** Orientierungsbereich,
   **72** erste Entwässerungszone,
   **73** Fixierungsbereich,
   **74** Vakuumzone,
**8** Sieb, Langsieb,
   **80** Lagerrolle,
   **81** Antriebsrolle,
**9** Walze, Formatwalze,
   **90** Welle,
**10** Sprühvorrichtung,

## Patentansprüche

1. **Verfahren zur Herstellung von schichtstoffplatten (1), Bleistiftbrettchen (202) und/oder Schäften (11) für Schreib-, Zeichen- oder Malgeräte,** wobei als Ausgangskörper geschichtetes Fasermaterial, wie Holzfasern oder auch Holzpulver verwendet wird,
**dadurch gekennzeichnet,**
**daß** zunächst in einem Behälter (7) eine im wesentlichen aus Rohstoffpulver und/oder aus Fasern (3) und Wasser (W) bestehende Pulpe (30) bzw. (WFP) gebildet wird, die im wesentlichen bindemittelfrei ist,
**daß** diese Pulpe (30) bzw. (WFP) auf ein Sieb (8) aufgebracht und unter Vliesbildung lagenweise scheiben- oder folienförmig vorgetrocknet wird,
**daß** das Vlies auf eine Walze (9) aufgerollt wird,
**daß** hierbei zwischen jede Lage (2) einer Materialschicht (MaS), eine Verbindungsschicht (4) aus Bindemittel (BM), Klebstoffen (KS) und/oder sonstigen Zusätzen (Z) bzw. Additiven aufgebracht wird
**und daß** die entstehenden Platten (1) geschnitten, entwässert und getrocknet und in an sich bekannter Weise weiterverarbeitet werden, gegebenenfalls auch zu Bleistiftbrettchen und/oder zu Schäften für Schreib-, Zeichen- oder Malgeräte.

2. Verfahren nach Anspruch 1,
**dadurch gekennzeichnet,**
**daß** die einzelnen Lagen (2) aus Fasern (3) und Wasser (W) als Pulpe (WFP) auf das Sieb (8) aufgebracht und die Fasern (3) in einem Orientierungsbereich (71) über einer ersten Entwässerungszone (72) in Längsrichtung orientiert und dann in einem Fixierungsbereich (73) in einer Vakuumzone (74) bei weiterem Trocknen fixiert werden.

3. Verfahren nach Anspruch 1 oder 2,
**dadurch gekennzeichnet,**
**daß** zunächst die zur Erzielung der gewünschten Plattenstärke erforderliche Anzahl von Vlies-Lagen (2) aufgetragen wird,
**daß** dann der gesamte Auftrag entlang einer Schnittlinie (201) auf der Walze (9) aufgeschnitten wird
**und daß** anschließend eine Nachtrocknung und ggf. auch eine thermische Nachbehandlung zur Verfestigung des Bindemittels (BM) und/oder des Klebstoffes (KS) erfolgt.

4. Verfahren nach einem der Ansprüche 1 bis 3,
**dadurch gekennzeichnet,**
**daß** die Platten (1) nach dem Trocknen und ggf. Pressen durch Schneiden auf das gewünschte Maß gebracht und in beliebiger Weise weiterverarbeitet werden.

5. Verfahren zur Herstellung von Bleistiftbrettchen oder von Schäften für Schreib- Zeichen- oder Malgeräten, wobei als Ausgangskörper Schichtstoffplatten verwendet werden, die aus geschichtem Faser- oder Pulvermaterial gemäß den Ansprüchen 1 bis 4 hergestellt wurden,
**dadurch gekennzeichnet,**
**daß** die nach dem Entwässern und Trocknen entstehenden Platten (1) - in an sich bekannter Weise - zu Bleistiftbrettchen (202) und/oder direkt zu Schäften (11) für Schreib- Zeichen- oder Malgeräte weiterverarbeitet werden.

6. Verfahren nach Anspruch 5,
**dadurch gekennzeichnet,**
**daß** die Fertigstellung der Bleistiftbrettchen (202) nach dem Trocknen und ggf. Pressen der Platten (1) durch Schneiden auf das gewünschte Maß und einbringen der Nuten (203) in an sich bekannter Weise erfolgt.

7. Schichtstoffplatte, hergestellt nach einem der Ansprüche 1 bis 4, **dadurch gekennzeichnet,**
**daß** die einzelnen Lagen (2) der Grundmasse (GM), vor der Verbindung der Materialschichten (MaS) miteinander, im wesentlichen frei von Bindemitteln (BM) und/oder Klebstoffen (KS) sind,
**daß** zwischen jeder Lage (2) bzw. Materialschicht (MaS) eine Verbindungsschicht (4) aus migrierbaren Bindemitteln (BM), Klebstoffen (KS) und/oder sonstigen Zusätzen (Z) vorhanden ist
**und daß** das Bindemittel (BM), der Klebstoff (KS) und/oder die sonstigen Zusätze (Z) der Verbindungsschicht (4) wenigstens teilweise in die Materialschicht (MaS) eingedrungen ist und nach dem Verbinden der Materialschichten (MaS) miteinander, partiell ggf. unterschiedlich verteilt, zwischen den einzelnen Fasern (3) oder Partikel der Materialschichten (MaS) als Migrationsschicht (5) vorliegt.

8. Schichtstoffplatte nach Anspruch 7,
**dadurch gekennzeichnet,**
**daß** das Bindemittel (BM), der Klebstoff (KS) und/oder die sonstigen Zusätze (Z) der Verbindungsschicht (4) zwischen den einzelnen Fasern (3) oder Partikel der Lagen (2) bzw. der Materialschichten (MaS) insbesondere in der Migrationsschicht (5) ungleichmäßig verteilt ist bzw. sind.

9. Schichtstoffplatte nach Anspruch 7 oder 8,
**dadurch gekennzeichnet,**
**daß** in den Materialschichten (MaS) bzw. Lagen (2) ein Konzentrationsgefälle des Bindemittels (BM), Klebstoffs (KS) und/oder der sonstigen Zusätze (Z) besteht,
wobei in den Kernbereichen (21) der Materialschichten (MaS) weniger Bindemittel (BM), Klebstoff (KS)und/oder sonstige Zusätze (Z) vorhanden ist bzw. sind, als in den Randbereichen (22) der Lagen (2).

10. **Bleistiftbrettchen** aus Schichtstoffen, das aus schichtweise aufgebauten und miteinander verbundenen Lagen (2) bzw. Platten, Scheiben oder Folien aus Fasern (3) oder Pulvern, insbesondere aus Holzfasern oder Holzschliff besteht, zur Herstellung von Schreibgeräten bzw. Schäften (11) aus Schichtstoffen, die nach einem der Ansprüche 1 bis 6 hergestellt wurden, bzw. aus Schichtstoffplatten nach einem der Ansprüche 7 bis 9,
**dadurch gekennzeichnet,**
**daß** die einzelnen Lagen (2) bzw. die Materialschichten (MaS) zunächst frei von Bindemitteln (BM) sind,
**daß** zwischen jeder Materialschicht (MaS) bzw. Lage (2) eine Verbindungsschicht (4) aus Bindemittel (BM), Klebstoff (KS) und/oder sonstigen Zusätzen (Z) vorhanden ist,
**und daß** das Bindemittel (BM), der Klebstoff (KS) und/oder die sonstigen Zusätze (Z) der Verbindungsschicht (4) wenigstens teilweise in die Materialschicht (MaS) eingedrungen ist und nach dem Verbinden der Materialschichten (MaS) miteinander, partiell ggf. unterschiedlich verteilt, zwischen den einzelnen Fasern (3) oder Partikel der Materialschichten (MaS) als Migrationsschicht (5) vorliegt.

11. Bleistiftbrettchen nach Anspruch 10,
**dadurch gekennzeichnet,**
**daß** die einzelnen Lagen (2) bzw. Scheiben oder Folien durch die Verbindungsschichten (4) miteinander fest verbunden sind
**und daß** das Bindemittel (BM), der Klebstoff(KS) und/oder die sonstigen Zusätze (Z) von den Verbindungsschichten (4) aus in die jeweils angrenzenden Lagen (2) der Materialschichten (MaS) als Migrationsschicht (5) eingedrungen ist.

12. **Schreibgerät** mit einem Schaft aus Schichtstoffen, wobei der Schaft (11) aus schichtweise aufgebauten und miteinander verbundenen Lagen (2) bzw. Scheiben oder Folien aus Fasern (3) oder Pulvern, insbesondere aus Holzfasern oder Holzschliff, besteht, nach einem der vorhergehenden Ansprüche, und eine Mine (6) eingeleimt oder eingesetzt ist, **dadurch gekennzeichnet**,
**daß** die einzelnen Lagen (2) der Grundmasse (GM), insbesondere vor der Verbindung der Materialschichten (MaS) miteinander, im wesentlichen frei von Bindemitteln (BM) und/oder Klebstoffen (KS) sind,
**daß** zwischen jeder Lage (2) bzw. Materialschicht (MaS) eine Verbindungsschicht (4) aus migrierbaren Bindemitteln (BM), Klebstoffen (KS) und/oder sonstigen Zusätzen (Z) vorhanden ist
**und daß** das Bindemittel (BM), der Klebstoff (KS) und/oder die sonstigen Zusätze (Z) der Verbindungsschicht (4) wenigstens teilweise in die Materialschicht (MaS) eingedrungen ist und nach dem Verbinden der Materialschichten (MaS) miteinander, partiell ggf. unterschiedlich verteilt, zwischen den einzelnen Fasern (3) oder Partikel der Materialschichten (MaS) als Migrationsschicht (5) vorliegt.

13. Schreibgerät nach Anspruch 12,
**dadurch gekennzeichnet,**
**daß** das Bindemittel (BM), der Klebstoff (KS) und/oder die sonstigen Zusätze (Z) der Verbindungsschicht (4) bzw. der Migrationsschicht (5) zwischen den einzelnen Fasern (3) oder Partikel der Lagen (2) bzw. der Materialschichten (MaS) ungleichmäßig verteilt ist bzw. sind.

14. Schreibgerät nach Anspruch 12 oder 13,
**dadurch gekennzeichnet,**
**daß** in den Materialschichten (MaS) bzw. Lagen (2) ein Konzentrationsgefälle des Bindemittels (BM), Klebstoffs (KS) und/oder der sonstigen Zusätze (Z) besteht,
wobei in den Kernbereichen (21) der Materialschichten (MaS) weniger Bindemittel (BM), Klebstoff (KS)und/oder sonstige Zusätze (Z) vorhanden ist bzw. sind, als in den Randbereichen (22) der Lagen (2).

15. Schreibgerät nach einem der Ansprüche 12 bis 14,
**dadurch gekennzeichnet,**
daß die einzelnen Lagen (2) bzw. die Materialschichten (MaS) des Schaftes (11) vor der Verbindung miteinander bzw. vor dem Aufbringen der Verbindungsschichten (4) im wesentlichen frei von Bindemitteln (BM) und/oder sonstigen Zusätzen (Z) sind.
